Europäisches Patentamt

European Patent Office

Office européen des brevets

(19)

(11) **EP 0 895 252 A1**

(12) **EUROPEAN PATENT APPLICATION**

(43) Date of publication:
03.02.1999 Bulletin 1999/05

(51) Int. Cl.$^6$: **H01B 1/16**, C04B 41/88

(21) Application number: **98111845.8**

(22) Date of filing: **26.06.1998**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(30) Priority: **29.07.1997 US 901975**<br><br>(71) Applicant:<br>**E.I. DU PONT DE NEMOURS AND COMPANY**<br>**Wilmington Delaware 19898 (US)** | (72) Inventors:<br>• Osborne, James<br> **West Grove, Pennsylvania 19390 (US)**<br>• Siuta, Vincent, Paul<br> **Cherry Hill, New Jersey 08003 (US)**<br><br>(74) Representative:<br>**Towler, Philip Dean et al**<br>**Frank B. Dehn & Co.,**<br>**European Patent Attorneys,**<br>**179 Queen Victoria Street**<br>**London EC4V 4EL (GB)** |

(54) **Thick film silver termination composition**

(57)    The present invention is directed to thick film silver termination composition comprising, based on the total composition; a. 60-80% wt. silver powder; b. 0.1-15% wt. fine particles of glass binder having a softening point of 400 to 650°C and an absolute viscosity of less than $10^6$ poise at firing temperature; c. 0.1-5% wt. negative temperature coefficient of resistance (TCR) driv- ers; and wherein a, b, and c are dispersed in an organic vehicle. The invention is further to a composition wherein the negative TCR drivers may be substituted by hydrides of metals of the fourth and fifth groups of the periodic table. The negative TCR drivers may also be substituted with select metal powders, which may be combined with the hydrides or drivers.

FIG.1

**Description**

FIELD OF THE INVENTION

This invention relates to thick film silver termination compositions containing negative Temperature Coefficient of Resistance (TCR) drivers or metal hydrides.

BACKGROUND OF THE INVENTION

Since it has become the trend in the industry to make smaller and cheaper electronic devices, it has become necessary to reduce the size and cost of the components, such as thick film chip resistors and hybrid resistors used in such devices.

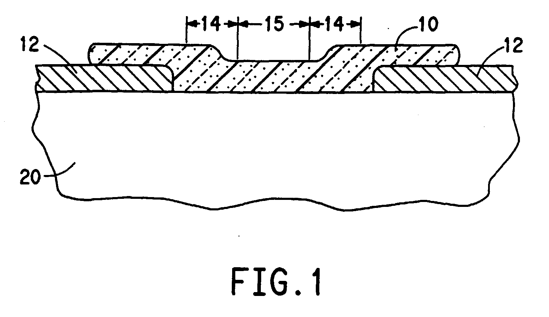

This has been accomplished by using low cost Ag-rich terminations to terminate small geometry resistors which are less than 2 mm in length. The observed TCR of a resistor is not only a function of the resistor ink itself but also is dependent upon the termination material such as the conductor runner. As used herein, TCR = (Temperature coefficient of resistivity) - (Thermal expansion coefficient) . A typical resistor/conductor combination is illustrated in Fig. 1 including a substrate 20 having a resistor 10 printed thereon which terminates at each end to a conductor runner 12. Also illustrated are interface regions 14 near each end of the resistor near the termination point. The interface region 14 is the area of the resistor susceptible to diffusion of silver from the conductor.

In preparation of the combination, the conductor is printed and fired prior to printing and firing of the resistor material. The conductor may be fired in a conventional manner, for example, at about 850°C peak in a 30 minute cycle. During the resistor firing, the conductor material diffuses into the resistor to form an interface region 14 that has electrical properties different from the bulk of the resistor 16. The impact of this interface region on the observed TCR will depend upon the extent of the diffusion of the conductor material into the resistor and the resistor length. The longer the resistor, the less influence on the observed TCR. For low value resistors, the high TCR of the conductor runner will raise the observed TCR above the bulk value of the resistor. Ag conductor runners will have the greatest impact on the observed TCR.

As discussed above, there are performance trade-offs in using Ag terminations with short resistors. Such resistors exhibit significant problems resulting from the diffusion of Ag from the terminations into the short resistor. One of the problems is a significant "length effect" where the Resistance (R) and Temperature Coefficient of Resistance (TCR) of the resistor is dependent on the length of the resistors. Length effects can be reduced by using Pd/Ag or gold terminations to minimize resistor/termination interactions. However, this approach is not favored for obvious cost reasons.

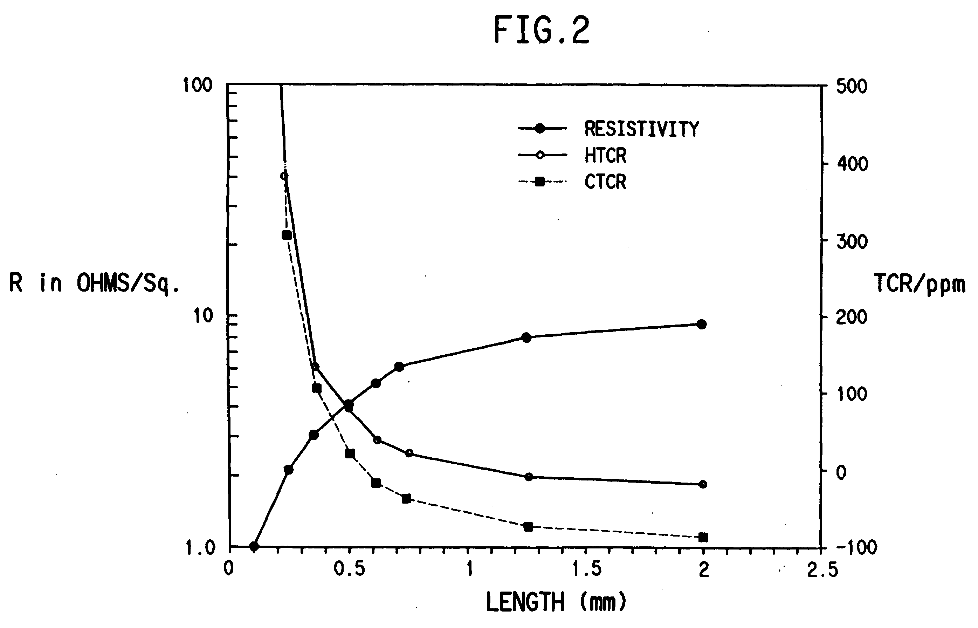

Figure 2 is an illustration of "length effect" in a Ag terminated thick film resistor. It shows that the Resistance decreases and the TCR increases as the length of the resistor is decreased below 2 mm. If Ag diffusion into the resistor is prevented, R and TCR of the resistor are independent of length and for design purposes R obeys the basic thick film equation:

$$R = Rs * n$$

        where:

    R = resistance
    Rs = sheet resistance
    n = l/w = no. of squares
    In addition to + or - 1% tolerance in R, state of the art resistors are currently manufactured to + or - 100 ppm/C tolerance in TCR. In order to obtain even tighter tolerances in TCR without increasing resistor size and cost, new compositions are needed for terminations which will reduce length effect in Ag-terminated resistors. Therefore, the present invention is a low cost method to reduce the length effect of Ag terminated low ohm (<100 ohm) $RuO_2$ resistors through the addition of negative TCR drivers and/or metal hydrides to the Ag termination composition.

BRIEF DESCRIPTION OF THE DRAWINGS

Fig. 1 is a schematic representing a typical conductor/resistor combination.

Fig. 2 is a graphical illustration representing illustration of "length effect" in a Ag terminated thick film resistor.

Fig. 3 is a graphical illustration representing the HTCR as a function of resistor length for a nominal 10 ohm resistor sequentially fired over various Ag-rich terminations.

Fig. 4 is a graphical illustration representing the length effect of a 10 ohm resistor terminated with a stand silver termination (Termination A) to the length effect obtained with a $TiH_2$ doped Ag termination on the present invention.

SUMMARY OF THE INVENTION

The present invention is directed to thick film silver termination composition comprising, based on total composition;

    a. 60-80 %wt. silver powder;
    b. .1-15 %wt. fine particles of glass binder having a softening point of 400 to 650°C and an absolute viscosity of less than $10^6$ poise at firing temperature;
    c. .1-5% wt. negative TCR driver; and
    wherein a, b, and c are dispersed in an organic vehicle.

The invention is further to a composition wherein the negative TCR drivers may be substituted by hydrides of metals of the fourth and fifth groups of the periodic table. The negative TCR drivers are may also be substituted with select metal powders or the powders may be combined with the hydrides or drivers.

DETAILED DESCRIPTION OF THE INVENTION

In order to minimize length effect, Ag-rich termination compositions are employed comprising Ag powder as the conductive, lead-boro-silicate glass as the inorganic binder and a negative TCR driver(s), dispersed in an organic screen printing vehicle. TCR drivers may be used separately or may be used in combinations. The TCR driver(s) may be found in the glass or may be added directly to the Ag termination composition during milling or it may be found in both. The function of the TCR driver is to compensate for the effects of Ag diffusion on the R and TCR of the resistor. The TCR driver is present in an amount equal to or less than five weight percent of total solids in termination.

As used herein, TCR of a resistor is a measurement of the resistance dependence on temperature.

Hot TCR (HTCR) and Cold TCR (CTCR) are generally expressed in ppm/°C and are defined by (1) and (2).

$$\text{HTCR in ppm/°C} = \frac{R_{125}-R_{25}}{R_{25}(125\text{-}25)} \times 10^6 \tag{1}$$

$$\text{CTCR in ppm/°C} = \frac{R_{-55}-R_{25}}{R_{25}(-55\text{-}25)} \times 10^6 \tag{2}$$

where

    $R_{25}$ = Resistance in ohms/sq at 25°C
    $R_{125}$ = Resistance in ohms/sq at 125°C
    $R_{-55}$ = Resistance value in ohms/sq at -55°C

Although adding negative TCR drivers (e.g. oxides of Ti, Nb, Mn, Fe, Co, Cr, W, Mo, V and Sb) to Ag terminations will reduce the length effect of Ag terminated $RuO_2$ resistors, the hydrides of metals of the fourth and fifth groups of the periodic table (e.g., $TiH_2$, $ZrH_2$, $HfH_2$, CbH, $ThH_4$ and TaH) have been found to be particularly effective as drivers. It is presumed that these hydrides decompose and provide a reducing atmosphere which may inhibit formation of Ag+ which is very mobile and diffuses readily into the resistor glass. After decomposition the metal formed is very reactive so it alloys with Ag which is abundant in the termination. Since these metals are strong reducing agents, the oxidation of Ag to Ag+ is further inhibited. After firing, the reactive metal is internally oxidized in the Ag, so it is uniformly distributed and available for diffusion into the resistor glass (along with any Ag+ that forms).

The TCR driver that diffuses into the resistor glass increases R and decreases TCR, so it compensates for the effect of Ag+ diffusion which decreases R and increases TCR. By suitably adjusting the type and concentration of TCR driver in the termination, the length effect caused by Ag+ diffusion into the resistor can be essentially eliminated. More specific examples of TCR drivers are $Sb_2O_3$, $Fe_2O_3$, $Fe_3O_4$, $WO_3$, $Nb_2O_3$, $V_2O_5$, $Cr_2O_3$, $MoO_3$, $TiO_2$, $Mn_2O_3$, $MnO_3$, $Ta_2O_5$, and $Co_2O_3$.

Furthermore, metallic powders such as Ti, Nb, Mn, Fe, Co, Cr, W, Mo, V, and Sb added to the Ag termination alone or in combination with one or more of the above hydrides or TCR drivers are also very effective in minimizing length effect. It is believed the reducing atmosphere created by hydride decomposition moderates their rate of oxidation and enables them to act as reducing agents to inhibit formation of Ag+. After eventual oxidization, they diffuse into the resistor glass and serve as negative TCR drivers to compensate for R/TCR changes caused by Ag+ diffusion into the resistor.

The silver powders can have various morphologies such as flake or non-flake. The non-flake powders can be irregularly shaped or spherical. Preferably, fine flake or spherical silver powders with 1 μm average particle size are utilized.

Another component of the silver compositions of this invention is a low softening point glass at .1-15 wt % of the total composition and preferably at .1-10 wt % and more preferably at .1-2 wt %. By low-softening point glass is meant a glass having a softening point below 650°C and preferably below 500°C, as measured by the conventional fiber elongation method (ASTM C 338-57). Therefore, the glass binder in the Ag termination should have a softening point in the range of 400°C-650°C. Its function is to wet the conductive in order to aid coalescence and sintering of the Ag particles and to provide a bond to the substrate. The glass utilized in this invention also has to have a low viscosity at the firing temperature. Glasses having an absolute viscosity of less than $10^6$ poise at the firing temperature satisfy the requirements for the silver compositions by facilitating the transport of the inorganic materials from the composition into the interior of the substrate body along the grain boundaries and voids.

Typical examples of glasses meeting the above criteria are lead bismuth borate glasses containing, by weight %, $Bi_2O_3$, 40-60; PbO, 28-37; and $B_2O_3$, 3-32. A particularly preferred glass contains $Bi_2O_3$, 60%; PbO, 37%; and $B_2O_3$, 3%. In addition, lead-boro-silicate glasses modified with $Al_2O_3$, CaO, MgO, ZnO, $TiO_2$, $ZrO_2$, etc. are suitable provided they are stable, durable, and have a softening point in the range indicated. Examples of other suitable low softening point glasses include: Pb-Zn alumino-borosilicate, Pb Zn borosilicate, Zn-Cu borosilicate, alkali borosilicate, alkali-alumino borosilicate, Bi borosilicate, Bi-Zn borosilicate. The glass binder should yield good conductivity, adhesion and densification of the Ag termination when fired in the range of 800-900°C, with a prefered firing temperature of 850°C.

The glasses are prepared by conventional glass-making techniques, by mixing the desired components (or precursors thereof, e.g., $H_3BO_3$ for $B_2O_3$) in the desired proportions and heating the mixture to form a melt. As is well known in the art, heating is conducted to a peak temperature and for a time such that the melt becomes entirely liquid, and gaseous evolution has ceased. In the present work the components are premixed by shaking in a jar and then melted in a Pt crucible at approximately 1000°C. The melt is then poured into cold water and, after separation from the quench water, the crude frit is freed from residual water by drying in an oven. The crude frit is then ball-milled for 40 hours in water using alumina balls. After discharging the milled frit slurry from the mill, the excess solvent is removed by decantation and the frit powder is air dried at room temperature. The dried powder is then screened through a 60-mesh screen to remove any large particles.

The glass powder should have a particle size less than 10 μm and preferably less than 5 μm. Likewise, the Ag powder and TCR driver or its precursor should have a particle size of less than 5 μm and preferably ca. 1 μm in diameter.

The inorganic solids content of the silver composition of this invention (silver, glass and inorganic material or precursor thereof) is dispersed in an organic vehicle to form printable composition pastes. The inorganic particles are mixed with an essentially inert liquid medium (vehicle) by mechanical mixing using a planetary mixer, then dispersed on a three roll mill to form a paste-like composition having suitable consistency and rheology for screen printing. The latter is printed as a "thick film" on conventional ceramic substrates in the conventional manner.

Any essentially inert liquid may be used as the vehicle. Various organic liquids, with or without thickening and/or stabilizing agents and/or other common additives, may be used as the vehicle. Exemplary of organic liquids which can be used are the aliphatic alcohols, esters of such alcohols, for example, acetates and propionate, terpenes such as pine oil, terpineol and the like, solutions of resins such as the polymethacrylates or lower alcohols and solutions of ethyl cellulose in solvents such as pine oil and the monobutyl ether of ethylene glycol monoacetate. A preferred vehicle is based on ethyl cellulose resin and a solvent mixture of alpha-, beta-, and gamma terpineols (generally 85-92% alpha-terpineol containing 8-15% beta- and gamma-terpineols). The vehicle may contain volatile liquids to promote fast setting after application to the substrate.

The ratio of vehicle to solids in the dispersions can vary considerably and depends upon the manner in which the dispersion is to be applied and the kind of vehicle used. Preferably, to achieve good coverage, the dispersions will contain complementarily about 60-90% solids and 40-10% vehicle, as described above. The compositions of the present invention may, of course, be modified by the addition of other materials which do not affect its beneficial characteristics. Such formulations is well within the skill of the art.

The pastes are conveniently prepared on a three-roll mill. The viscosity of the pastes is typically within the following ranges when measured on a Brookfield HBT viscometer at low, moderate, and high shear rates:

| Sheat Rate (sec$^{-1}$) | Viscosity (Pa·s) | |
|---|---|---|
| 0.2 | 100-5000 | |
| | 300-2000 | Preferred |
| | 600-1500 | Most Preferred |
| 4 | 40-400 | |
| | 100-250 | Preferred |
| | 140-200 | Most Preferred |
| 40 | 10-150 | |
| | 25-120 | Preferred |
| | 50-100 | Most Preferred |

The amount of vehicle is determined by the final desired formulation viscosity.

The silver compositions of this invention can be printed as film onto the substrates either by using an automatic printer or a hand printer in the conventional manner. Preferably, automatic screen stenciling techniques are employed, using a 200-mesh screen.

The ability of Ag terminations containing negative TCR drivers or metal hydrides to substantially reduce or eliminate the length effect in low ohm thick film resistors is limited to resistors containing $RuO_2$ as the main conductive phase. As presently practiced in the industry, low ohm resistances below 100 ohms/sq. is achieved by adding Pd/Ag in amounts greater than 10% by weight and in combination with $RuO_2$ as the conductive phase. Such resistors exhibit a large length effect which is not responsive to the addition of negative TCR drivers in the terminations.

Likewise, high ohm resistors with sheet resistances above 100 ohm/sq. generally use glasses with higher viscosities and softening points than those used for low ohm resistors. Such resistor glasses tend to slow the rate of Ag+ diffusion from the termination into the resistor which causes smaller length effects than observed in higher ohm resistors.

Therefore, the main application for the current invention is in low ohm resistors where low viscosity, low softening point glasses must be used to dispersed the large amount of $RuO_2$ conductive phase required to obtain low resistance values. Although the new terminations of the current invention may be used with high ohm resistors, the improvements in length effect observed are not as great because diffusion of the negative TCR driver (and Ag+) through the higher viscosity glass at the 850°C firing temperature is substantially reduced.

Formulation and Application

In the preparation of the compositions of the present invention, the particulate inorganic solids are mixed with the organic medium and dispersed with suitable equipment, such as three-roll mill, to form a suspension, resulting in a composition for which the viscosity will be in the range of about 100-200 pascal-seconds at a shear rate of 4 sec$^{-1}$.

In the examples which follow, the formulation was carried out in the following manner:

The ingredients of the paste are weighed together in a container. The components are then vigorously mixed to form a uniform blend; then the blend is passed through dispersing equipment, such as a three-roll mill, to achieve a good dispersion of particles. A Hegman gauge is used to determine the state of dispersion of the particles in the paste. This instrument consists of a channel in a block of steel that is 25 $\mu$m deep (1 mil) on one end and ramps up to zero depth at the other end. A blade is used to draw down paste along the length of the channel. Scratches appear in the channel where the agglomerates' diameter is greater than the channel depth. A satisfactory dispersion will give a fourth scratch point of 10-18 $\mu$m typically. The point at which half of the channel is uncovered with a well dispersed paste is between 3 and 8 $\mu$m typically. Fourth scratch measurement of >20 $\mu$m and "half-channel" measurements of >10 $\mu$m indicate a poorly dispersed suspension.

The compositions are then applied to a substrate, such as alumina ceramic, usually by the process of screen printing, to a wet thickness of about 30-80 microns, preferably 35-70 microns, and most preferably 40-50 microns. The compositions of this invention can be printed onto the substrates either by using an automatic printer or a hand printer in the conventional manner, preferably automatic screen printing techniques are employed using a 200- to 325-mesh screen. The printed pattern is then dried at below 200°C, about 150°C, for about 5-15 minutes before firing. Firing to effect sintering of both the inorganic binder and the finely divided particles of metal is preferably done in a well ventilated belt conveyor furnace with a temperature profile that will allow burnout of the organic matter at about 300°-600°C, followed by a period of maximum temperature of about 800°-1000°C, lasting about 5-15 minutes, followed by a controlled cooldown cycle to prevent over sintering, unwanted chemical reactions at intermediate temperatures or substrate fracture which can occur from too rapid cool down. The overall firing procedure will preferably extend over a period of about 30-60 minutes, with 10-25 minutes to reach the firing temperature of 850°C, about 10 minutes at the firing temperature and about 10-25 minutes in cool down. In some instances, total cycle times can be used as short as 20-30 minutes by conventional firing and 7-14 minutes of infrared firing.

The present invention will be described in further detail by giving practical examples. The scope of the present invention, however, is not limited in any way by these practical examples.

All values given in the tables are weight percent based on total composition.

EXAMPLES

The following compositions are commercially available silver termination compositions, listed as follows:

Composition A - Silver termination composition 5426
Composition B - Silver termination composition QS171
Composition C - Silver termination composition 6160
Compositions A, B and C are available from E. I. du Pont de Nemours and Company, Wilmington, DE.

Also, as shown in Table 1, are additional silver termination compositions which may be utilized in the practice of the invention.

TABLE 1

|  | D | E | F | G | H | I |
|---|---|---|---|---|---|---|
| Ag | 73.35 | 72.40 | 72.40 | 72.40 | 72.40 | 72.40 |
| Pd | 0.55 | 0.60 | 0.60 | 0.60 | 0.60 | 0.60 |
| $Bi_2O_3$ |  |  |  |  |  |  |
| $PbO_2$ |  |  |  |  |  |  |
| $Cu_2O$ |  |  |  |  |  |  |
| Cr |  |  |  |  |  | 1.00 |
| *W |  |  | 1.00 |  |  |  |
| *Wsi$_2$ |  |  |  | 1.00 |  |  |
| *TiH$_2$ | 1.55 | 1.04 | 0.69 | 0.69 | .897 | 0.69 |
| (ethyl cellulose/terpineol) Organic Vehicle | 23 | 24.75 | 24.5 | 24.5 | 25.05 | 24.5 |
| Frit I |  | 0.67 | 0.45 | 0.45 | 0.585 | 0.45 |
| Frit II | 0.31 |  |  |  |  |  |
| Frit III | 0.93 |  |  |  |  |  |
| Frit IV |  | 0.09 | 0.06 | 0.06 | 0.78 | 0.06 |
| Frit V |  | 0.23 | 0.15 | 0.15 | 0.195 | 0.15 |
| Frit VI | 0.31 | 0.22 | 0.15 | 0.15 | 0.195 | 0.15 |

*TCR Drivers

Frit compositions used in compositions D-I are found in Table 2.

TABLE 2

| wt% based on total glass composition | | | | | | |
|---|---|---|---|---|---|---|
| | I | II | III | IV | V | VI |
| Oxide | | | | | | |
| PbO | 55.9 | 6.6 | 50.96 | 78.1 | | |
| $SiO_2$ | 2.8 | 23 | 26.06 | | 24.94 | |
| $B_2O_3$ | 8.1 | 8.5 | 6.94 | | 6.46 | |
| $Al_2O_3$ | 4.7 | 2.5 | 6.69 | | | |
| *$TiO_2$ | 3.3 | | 4.56 | | 13.77 | |
| ZnO | | | 2.79 | | | |
| CuO | | | | | | 9.1 |
| *MnO | | | | | 54.83 | |
| CaO | | | | | | |
| $GeO_2$ | | | | 21.9 | | 90.9 |
| $Bi_2O_3$ | | | | | | |
| | 100 | 100 | 100 | 100 | 100 | 100 |

*TCR Drivers

In Examples 1 through 67 -- silver terminations are printed on nominal 10 Ohm resistors (R1-R4) used to demonstrate the general utility of the present invention in significantly reducing the "length effect" commonly observed in short resistors terminated with Ag. The conductive phase in the resistors is $RuO_2$, typically present in amounts greater than 40% $RuO_2$ by weight of solids, in order to obtain the low 10 ohm/sq. sheet resistance. Although the glass chemistries of the resistors are significantly different, the resistor glasses have a low softening point in the 400-650°C range and a low viscosity at a range of 800-900°C firing temperature which allows for good wetting, dispersion and densification by sintering of the $RuO_2$ conductive phase. Resistor compositions R2 and R3 are commercial compositions and identified as follows:

R2 - Resistor composition 2011
R3 - Resistor composition is a 50/50 by weight blend of 2011 and 1711
Compositions R2 and R3 are available from E. I. du Pont de Nemours and Company, Wilmington, DE.

Compositions for R1 and R4 are given in Table 3.

TABLE 3

| Components | R1 - wt% | Components | R4 - wt% |
|---|---|---|---|
| $RuO_2$ | 41.04 | $RuO_2$ | 40.32 |
| $Ag_2O$ | 1.44 | $Ag_2O$ | 1.44 |
| $MnO_2$ | 0.36 | $TiO_2$ | 1.44 |
|  |  |  |  |
|  |  |  |  |
| a | 2.16 | a | 2.16 |
| b | 2.88 | d | 14.40 |
| c | 4.68 | e | 8.64 |
| d | 19.44 | f | 3.60 |
| *Organic Vehicle | 28.00 | *Organic Vehicle | 28.00 |

*Organic Vehicle - ethyl cellulose and terpineol

Formulations for a-f are given in TABLE 4.

TABLE 4

|  | a | $a_1$ | b | c | d | e | f |
|---|---|---|---|---|---|---|---|
| $Al_2O_3$ |  | 1.1 |  |  |  |  |  |
| BaO |  |  |  |  |  |  | 20.90 |
| $BiO_2$ |  | 75.1 |  |  |  |  |  |
| $B_2O_3$ |  |  | 18.24 | 6.80 | 8.5 | 3.08 | 28.02 |
| CuO | 14.0 |  |  |  |  | 2.76 |  |
| CaO |  | 2.4 |  |  |  |  | 5.96 |
| MgO |  |  |  |  |  |  | 5.50 |
| MnO |  |  |  | 9.41 |  |  |  |
| $MnO_2$ | 21.5 |  |  |  |  |  |  |
| $Nb_2O_5$ |  |  | 16.32 |  |  |  |  |
| $P_2O_5$ |  |  |  |  |  |  | 1.86 |
| PbO |  | 10.9 | 6.33 | 52.80 | 66.0 | 58.90 |  |
| $SiO_2$ |  | 9.3 | 3.84 | 18.40 | 23.0 | 29.52 | 11.19 |
| $TiO_2$ |  |  |  | 10.59 |  |  |  |
| ZnO | 14.5 | 1.2 | 55.28 |  |  | 2.59 | 9.34 |
| $ZrO_2$ |  |  |  |  |  |  | 8.62 |
| $a_1$ | 50 |  |  |  |  |  |  |

| | | | | SEQUENTIAL FIRED TERMINATION/RESISTOR | | | | dHTCR | dCTCR | COFIRED TERMINATION/RESISTOR | | | | dHTCR | dCTCR |
|---|---|---|---|---|---|---|---|---|---|---|---|---|---|---|---|
| Ex. No. | Resistor No. | Termination Composition | Additive Wt % | HTCR 0.25mm | HTCR 1.25mm | CTCR 0.25mm | CTCR 1.25mm | (0.25-1.25mm) | | HTCR 0.25mm | HTCR 1.25mm | CTCR 0.25mm | CTCR 1.25mm | 0.25-1.25mm) | |
| 1 | R1 | A | None | 280 | 52 | 219 | -18 | 228 | 237 | 258 | 47 | 193 | -23 | 211 | 216 |
| 2 | R1 | A+ | 1.5% $TiO_2$ | 110 | 115 | 86 | 90 | -5 | -4 | -6 | -1 | -91 | -77 | -5 | -14 |
| 3 | R1 | A+ | 3.0% $TiO_2$ | -194 | -73 | -302 | -160 | -121 | -142 | -237 | -87 | -350 | -177 | -150 | -173 |
| 4 | R1 | A+ | 4.0% $Nb_2O_5$ | 124 | 21 | 55 | -52 | 103 | 107 | 90 | 14 | 18 | -59 | 76 | 77 |
| 5 | R1 | A+ | 4.0% $MnO_2$ | 138 | 32 | 57 | -41 | 106 | 98 | 100 | 27 | 13 | -49 | 73 | 62 |
| 6 | R1 | B | None | 470 | 72 | 439 | 5 | 398 | 434 | 550 | 79 | 522 | 13 | 471 | 509 |
| 7 | R1 | B+ | 1.5% $TiO_2$ | 111 | 113 | 79 | 75 | -2 | 4 | 174 | 35 | 112 | -36 | 139 | 148 |
| 8 | R1 | B+ | 3.0% $TiO_2$ | -146 | -58 | -248 | -143 | -88 | -105 | -175 | -57 | -278 | -141 | -118 | -137 |
| 9 | R1 | B+ | 4.0% $Nb_2O_5$ | 336 | 53 | 290 | -16 | 283 | 306 | 356 | 58 | 309 | -11 | 298 | 320 |
| 10 | R1 | B+ | 4.0% $MnO_2$ | 300 | 56 | 243 | -14 | 244 | 257 | 329 | 53 | 272 | -18 | 276 | 290 |
| 11 | R1 | C | None | 259 | 47 | 204 | -24 | 212 | 228 | 273 | 47 | 217 | -24 | 226 | 241 |
| 12 | R1 | C+ | 1.5% $TiO_2$ | -100 | -138 | -162 | -202 | 38 | 40 | -50 | -15 | -140 | -93 | -35 | -47 |
| 13 | R1 | C+ | 3.0% $TiO_2$ | -474 | -247 | -634 | -367 | -227 | -267 | -422 | -196 | -570 | -308 | -226 | -262 |
| 14 | R1 | C+ | 4.0% $Nb_2O_5$ | 95 | 23 | 22 | -51 | 72 | 73 | 61 | 5 | -15 | -70 | 56 | 55 |
| 15 | R1 | C+ | 4.0% $MnO_2$ | 137 | 26 | 58 | -49 | 111 | 107 | 146 | 25 | 67 | -49 | 121 | 116 |
| 16 | R2 | A | None | 158 | 17 | 84 | -72 | 141 | 156 | 138 | 17 | 52 | -72 | 121 | 124 |
| 17 | R2 | A+ | 1.5% $TiO_2$ | -47 | -45 | -117 | -116 | -2 | -1 | -42 | -29 | -145 | -124 | -13 | -21 |

**TABLE 5**

| | | | | TABLE 5 (cont'd.) | | | | | | | | | | | |
|---|---|---|---|---|---|---|---|---|---|---|---|---|---|---|---|
| | | | | SEQUENTIAL FIRED TERMINATION/RESISTOR | | | | dHTCR | dCTCR | COFIRED TERMINATION/RESISTOR | | | | dHTCR | dCTCR |
| Ex. No. | Resistor No. | Termination Composition | Additive Wt % | HTCR 0.25mm | HTCR 1.25mm | CTCR 0.25mm | CTCR 1.25mm | (0.25-1.25mm) | | HTCR 0.25mm | HTCR 1.25mm | CTCR 0.25mm | CTCR 1.25mm | 0.25-1.25mm | |
| 18 | R2 | A+ | 3.0% $TiO_2$ | -259 | -60 | -222 | -158 | -199 | -64 | -151 | -67 | -271 | -166 | -84 | -105 |
| 19 | R2 | A+ | 4.0% $Nb_2O_5$ | -121 | -46 | -234 | -142 | -75 | -92 | -112 | -51 | -231 | -148 | -61 | -83 |
| 20 | R2 | A+ | 4.0% $MnO_2$ | 153 | 13 | 70 | -75 | 140 | 145 | 151 | 14 | 65 | -75 | 137 | 140 |
| 21 | R2 | B | None | 337 | 39 | 274 | -46 | 298 | -235 | 427 | 20 | 370 | -40 | 407 | 410 |
| 22 | R2 | B+ | 1.5% $TiO_2$ | 200 | 204 | 169 | 173 | -4 | 35 | 180 | -17 | 106 | -69 | 197 | 175 |
| 23 | R2 | B+ | 3.0% $TiO_2$ | -19 | -31 | -116 | -124 | 12 | 85 | -1 | 6 | -99 | -107 | -7 | 8 |
| 24 | R2 | B+ | 4.0% $Nb_2O_5$ | 66 | -2 | -23 | -91 | 68 | 21 | 120 | 31 | 31 | -82 | 89 | 113 |
| 25 | R2 | B+ | 4.0% $MnO_2$ | 287 | 31 | 218 | -55 | 256 | -187 | 319 | 19 | 250 | -56 | 300 | 306 |
| 26 | R2 | C | None | 173 | 18 | 94 | -69 | 155 | 163 | 196 | 19 | 122 | -68 | 177 | 190 |
| 27 | R2 | C+ | 1.5% $TiO_2$ | 69 | 7 | 36 | -34 | 62 | 70 | -54 | -20 | -152 | -113 | -34 | -39 |
| 28 | R2 | C+ | 3.0% $TiO_2$ | -171 | -74 | -301 | -181 | -97 | -120 | -14 | -65 | -257 | -165 | 51 | -92 |
| 29 | R2 | C+ | 4.0% $Nb_2O_5$ | -99 | -37 | -210 | -133 | -62 | -77 | -96 | -45 | -206 | -142 | -51 | -64 |
| 30 | R2 | C+ | 4.0% $MnO_2$ | 171 | 17 | 90 | -71 | 154 | 161 | 185 | 17 | 103 | -73 | 168 | 176 |
| 31 | R3 | A | None | 98 | -32 | 11 | -122 | 130 | 133 | 127 | -24 | 54 | -112 | 151 | 166 |
| 32 | R3 | A+ | 3.0% $TiO_2$ | -270 | -199 | -408 | -320 | -71 | -88 | -294 | -165 | -442 | -280 | -129 | -162 |
| 33 | R3 | A+ | 4.0% $Nb_2O_5$ | -152 | -88 | -276 | -187 | -64 | -89 | -154 | -80 | -281 | -178 | -74 | -103 |
| 34 | R3 | A+ | 4.0% $MnO_2$ | 67 | -37 | -27 | -128 | 104 | 101 | 98 | -28 | 8 | -118 | 126 | 126 |

EP 0 895 252 A1

10

EP 0 895 252 A1

| TABLE 5 (cont'd.) | | | | | | | | | | | | | | | |
|---|---|---|---|---|---|---|---|---|---|---|---|---|---|---|---|
| | | | | SEQUENTIAL FIRED TERMINATION/RESISTOR | | | | dHTCR | dCTCR | COFIRED TERMINATION/RESISTOR | | | | dHTCR | dCTCR |
| Ex. No. | Resistor No. | Termination Composition | Additive Wt % | HTCR 0.25mm | HTCR 1.25mm | CTCR 0.25mm | CTCR 1.25mm | (0.25-1.25mm) | | HTCR 0.25mm | HTCR 1.25mm | CTCR 0.25mm | CTCR 1.25mm | (0.25-1.25mm) | |
| 35 | R3 | B | None | 226 | -5 | 148 | -91 | 231 | 239 | 281 | 1 | 214 | -83 | 280 | 297 |
| 36 | R3 | B+ | 3.0% $TiO_2$ | -60 | -77 | -175 | -174 | 17 | -1 | -113 | -101 | -233 | -203 | -12 | -30 |
| 37 | R3 | B+ | 4.0% $Nb_2O_5$ | 6 | -48 | -93 | -141 | 54 | 48 | 60 | -36 | -29 | -126 | 96 | 97 |
| 38 | R3 | B+ | 4.0% $MnO_2$ | 193 | -18 | 115 | -106 | 211 | 221 | 226 | -11 | 154 | -98 | 237 | 252 |
| 39 | R3 | C | None | 108 | -23 | 28 | -110 | 131 | 138 | 135 | -12 | 65 | -98 | 147 | 163 |
| 40 | R3 | C+ | 3.0% $TiO_2$ | -449 | -334 | -616 | -478 | -115 | -138 | -431 | -270 | -594 | -402 | -161 | -192 |
| 41 | R3 | C+ | 4.0% $Nb_2O_5$ | -254 | -107 | -389 | -209 | -147 | -180 | -257 | -110 | -396 | -213 | -147 | -183 |
| 42 | R3 | C+ | 4.0% $MnO_2$ | 90 | -27 | -2 | -116 | 117 | 114 | 99 | -21 | 8 | -108 | 120 | 116 |

11

| | | | | SEQUENTIAL FIRED TERMINATION/RESISTOR | | | | dHTCR | dCTCR | COFIRED TERMINATION/RESISTOR | | | | dHTCR | dCTCR |
|---|---|---|---|---|---|---|---|---|---|---|---|---|---|---|---|
| Ex. No. | Resistor No. | Termination Composition | Additive Wt % | HTCR 0.25mm | HTCR 1.25mm | CTCR 0.25mm | CTCR 1.25mm | (0.25-1.25mm) | | HTCR 0.25mm | HTCR 1.25mm | CTCR 0.25mm | CTCR 1.25mm | (0.25-1.25mm) | |
| 43 | R1 | A | None | 280 | 52 | 219 | -18 | 228 | 237 | 258 | 47 | 193 | -23 | 211 | 216 |
| 44 | R1 | A+ | 3% NbH | 141 | 22 | 69 | -52 | 119 | 121 | 132 | 28 | 57 | -46 | 104 | 103 |
| 45 | R2 | A | None | 158 | 17 | 84 | -72 | 141 | 156 | 138 | 17 | 52 | -72 | 121 | 124 |
| 46 | R2 | A+ | 3% NbH | -27 | -44 | -132 | -141 | 17 | 9 | 77 | -5 | -16 | -98 | 82 | 82 |
| 47 | R3 | A | None | 98 | -32 | 11 | -122 | 130 | 133 | 127 | -24 | 54 | -112 | 151 | 166 |
| 48 | R3 | A+ | 3% NbH | 32 | -57 | -52 | -154 | 89 | 102 | 18 | -54 | -75 | -151 | 72 | 76 |
| 49 | R1 | C | None | 259 | 47 | 204 | -24 | 212 | 228 | 273 | 47 | 217 | -24 | 226 | 241 |
| 50 | R1 | C+ | 3%NbH | 50 | 15 | -30 | -62 | 35 | 32 | 57 | 10 | -25 | -67 | 47 | 42 |
| 51 | R2 | C | None | 173 | 18 | 94 | -69 | 155 | 163 | 196 | 19 | 122 | -68 | 177 | 190 |
| 52 | R2 | C+ | 3% NbH | -101 | -35 | -211 | -131 | -66 | -80 | -94 | -95 | -192 | -176 | 1 | -16 |
| 53 | R3 | C | None | 108 | -23 | 28 | -110 | 131 | 138 | 135 | -12 | 65 | -98 | 147 | 163 |
| 54 | R3 | C+ | 3% NbH | -232 | -111 | -366 | -216 | -121 | -150 | -246 | -128 | -369 | -235 | -118 | -134 |
| 55 | R2 | A | None | 158 | 17 | 84 | -72 | 141 | 156 | | | | | | |
| 56 | R2 | A+ | 1% TiH$_2$ | 110 | 19 | 28 | -68 | 91 | 96 | | | | | | |
| 57 | R2 | A+ | 3% TiH$_2$ | -99 | -18 | -205 | -108 | -81 | -97 | | | | | | |
| 58 | R2 | A+ | 3% Nb$_2$O$_5$ | 50 | 9 | -36 | -78 | 41 | 42 | | | | | | |
| 59 | R2 | A+ | 3% MnTiO$_3$ | 41 | 8 | -51 | -80 | 33 | 29 | | | | | | |
| 60 | R2 | A+ | 3% TiC | 102 | 14 | 15 | -73 | 88 | 88 | | | | | | |
| 61 | R2 | A+ | 3% Ag$_2$WO4 | 59 | 0 | -27 | -88 | 59 | 61 | | | | | | |
| 62 | R4 | A | None | 273 | 109 | 260 | 88 | 164 | 172 | | | | | | |
| 63 | R4 | A+ | 3% Nb$_2$O$_5$ | 218 | 105 | 200 | 84 | 113 | 116 | | | | | | |
| 64 | R4 | A+ | 3% MnTiO$_3$ | 74 | 78 | 25 | 50 | -4 | -25 | | | | | | |
| 65 | R4 | A+ | 3% TiC | 215 | 102 | 194 | 81 | 113 | 113 | | | | | | |

TABLE 6

TABLE 6 (cont'd.)

| Ex. No. | Resistor No. | Termination Composition | Additive Wt % | SEQUENTIAL FIRED TERMINATION/RESISTOR | | | | | | COFIRED TERMINATION/RESISTOR | | | | | |
|---|---|---|---|---|---|---|---|---|---|---|---|---|---|---|---|
| | | | | HTCR 0.25mm | HTCR 1.25mm | CTCR 0.25mm | CTCR 1.25mm | dHTCR (0.25-1.25mm) | dCTCR | HTCR 0.25mm | HTCR 1.25mm | CTCR 0.25mm | CTCR 1.25mm | dHTCR 0.25-1.25mm) | dCTCR |
| 66 | R4 | A+ | 3% Ag$_2$WO4 | 121 | 76 | 98 | 53 | 45 | 45 | | | | | | |
| 67 | R4 | A+ | 3%TiH$_2$ | 129 | 81 | 104 | 57 | 48 | 47 | | | | | | |

Referring to TABLES 5 and 6, for comparison purposes it is convenient to use the difference in TCR (dHTCR and dCTCR) between resistors 0.25 mm and 1.25 mm in length as a measure of length effect. DHTCR and dCTCR values are found in columns labeled as such in Table 5 for sequentially fired terminations/resistors and for cofired terminations/resistors.

The data in TABLE 5 shows that the TCR of a low ohm $RuO_2$ resistor depends on the composition of the Ag termination and the geometry (length) of the resistor. Examples in TABLE 5 are for three nominal 10 ohm resistors 10R1, 10R2 and 10R3 terminated with Ag-rich terminations A, B, and C.

As shown in TABLE 5, when $TiO_2$, $Nb_2O_5$ and $MnO_2$ TCR drivers are added to terminations A, B, and C, the TCR of the resistor is negatively biased versus the undoped termination. Data are given for resistors 0.25 and 1.25 mm in length sequentially fired and cofired with the termination in a standard 850°C/30' profile. The TCR's of resistors terminated with A, B, and C containing no additives are also shown for comparison purposes.

In every case, the high positive TCR of the short 0.25 mm resistor is biased more negatively in TCR by the driver additive to the termination. Therefore, by controlling the concentration of TCR driver to the termination, the TCR of the resistor can be adjusted to a tolerance of +/- 100 ppm/C or better. Rows labeled dHTCR and dCTCR give the difference in TCR between 0.25 and 1.25 mm resistors after sequential firing and cofiring with the driver doped and undoped terminations. In general, the length effect of resistors as given by dHTCR and dCTCR in TABLES 5 and 6 is considerably reduced when driver doped terminations are used.

$TiO_2$ additions to the termination are more effective on a weight basis than $Nb_2O_5$ or $MnO_2$ in negatively biasing the TCR of short resistors in order to compensate for the positive TCR caused by Ag+ diffusion into the resistor. The examples show that 1 % $TiO_2$ added to the Ag terminations caused the TCR of the 0.25 mm resistors to change by more than -100 ppm/C.

Data in TABLE 6 shows that TCR driver additives to the termination to reduce length effect need not be limited to simple oxides such as $TiO_2$, $Nb_2O_5$, and MnOx. Compounds of Ti, Nb, W, Mn are equally effective. As shown in TABLE 6, additions of $MnTiO_3$, TiC, $Ag_2WO_4$, NbH, and $TiH_2$ to termination A resulted in a reduced length effect compared to the undoped A termination. Small $TiH_2$ additions to the termination were found to be particularly effective in reducing the length effect of the resistor. $TiH_2$ decomposed during firing to Ti metal which alloys with the Ag termination. It is believed that the $H_2$ evolved provides a reducing atmosphere which may help to inhibit formation and diffusion of Ag+ into the resistor. This mechanism coupled with the strong TCR driver contribution from $TiO_2$ is very effective in minimizing length effect in the resistor.

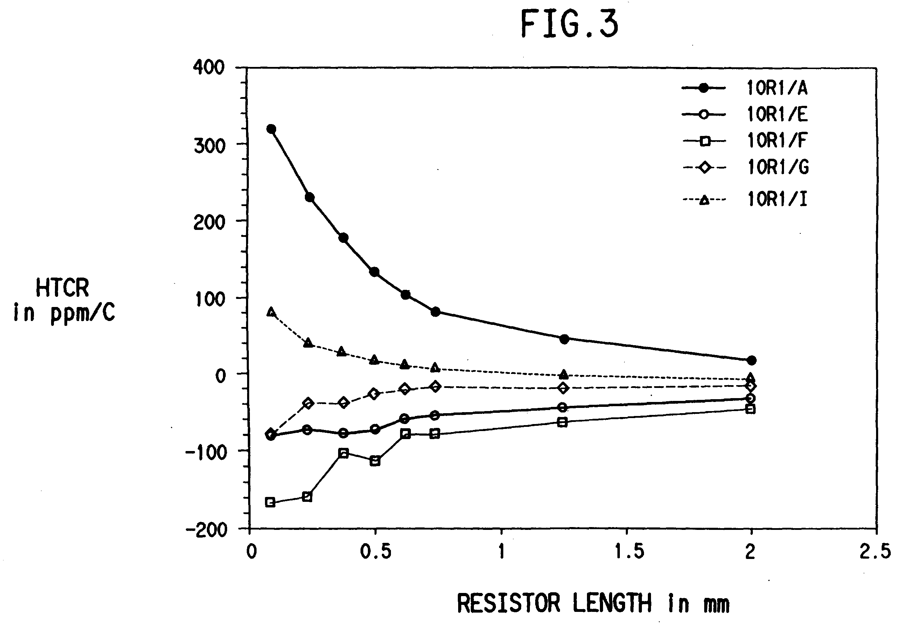

Referring to Figure 3, the addition of metallic reducing agents such as W, $Wsi_2$, and Cr in combination with $TiH_2$, to the Ag termination (Ag termination compositions F, G, I found in TABLE 1) were also found to be effective in controlling length effect in short $RuO_2$ resistors. Metallic additions permitted a reduction in the amount of $TiH_2$ required in order to improve length effect and allowed fine tuning of length effect behavior as shown in Curves F, G, I in Figure 3.

Figure 3 shows the HTCR as a function of resistor length for a nominal 10 ohm resistor R1 sequentially fired over various Ag-rich terminations. The HTCR of R1 terminated with composition A increases as resistor length decreases (Curve A) which is typically observed behavior. However, curves for compositions E, F,G and I (found in TABLE 1) are representative of the current invention and show that the length effect can be substantially reduced or nearly eliminated by suitable additions to the Ag termination.

It should be noted the $MnO_2$ additions were not effective in negatively biasing the TCR of R2 because this 10 ohm resistor contains significant amounts of MnO and is already saturated, therefore, additional $MnO_2$ from the termination had little effect on the length effect of the resistor.

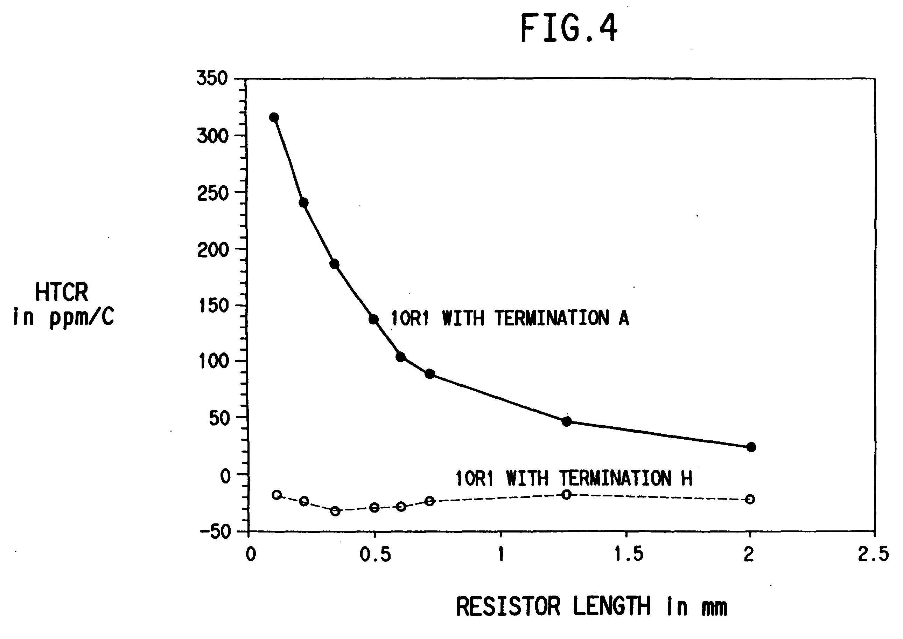

Figure 4 illustrates an improvement in length effect that can be obtained by practicing the present invention. The figure compares the length effect of a 10 ohm resistor terminated with a standard silver termination (Termination A) to the length effect obtained with a $TiH_2$ doped Ag termination of the present invention.

## Claims

1. A thick film silver termination composition comprising, based on total composition:

    a. 60-80% wt. silver powder;
    b. .1-15% wt. fine particles of glass binder having a softening point of 400 to 650°C and an absolute viscosity of less than $10^6$ poise at firing temperature;
    c. .1-5% wt. negative TCR driver; and
    wherein a, b, and c are dispersed in an organic vehicle.

2. A thick film silver termination composition comprising, based on total composition:

    a. 60-80% wt. silver powder;
    b. .1-15% wt. fine particles of glass binder having a softening point of 400 to 650°C and a absolute viscosity of less than $10^6$ poise at firing temperature;
    c. .1-5% wt. hydrides of metals of the fourth and fifth groups of the periodic table; and
    wherein a, b, and c are dispersed in an organic vehicle.

3.  A thick film silver termination composition comprising, based on total composition:

    a. 60-80% wt. silver powder;
    b. .1-15% wt. fine particles of glass binder having a softening point of 400 to 650°C and an absolute viscosity of less than $10^6$ poise at firing temperature;
    c. .1-5% wt. metallic powders selected from the group consisting of Ti, Nb, Mn, Fe, Co, Cr, W, Mo, V, and Sb; and
    wherein a, b, and c are dispersed in an organic vehicle.

4.  The composition of Claim 1 wherein the negative TCR drivers are selected from the group of oxides of Ta, Ti, Nb. Mn, Fe, Co, Cr, W, Mo, V and Sb.

5.  The composition of Claim 2 wherein the hydrides of metals are selected from the group consisting of $TiH_2$, $ZrH_2$, $HfH_2$, $CbH_2$, $ThH_4$ and TaH.

6.  The composition of Claim 1 further comprising metallic powders selected from the group consisting of Ti, Nb, Mn, Fe, Co, Cr, W, Mo, V, and Sb.

7.  The composition of Claim 2 further comprising metallic powders selected from the group consisting of Ti, Nb, Mn, Fe, Co, Cr, W, Mo, V, and Sb.

8.  The composition of Claim 1 wherein the glass binder is a lead bismuth borate glass.

9.  The composition of Claim 2 wherein the glass binder is a lead bismuth borate glass.

10. The composition of Claim 3 wherein the glass binder is a lead bismuth borate glass.

11. The composition of Claim 1 wherein the glass binder comprises .1-10% wt.

12. The composition of Claim 2 wherein the glass binder comprises .1-10% wt.

13. The composition of Claim 3 wherein the glass binder comprises .1-10% wt.

14. The composition of Claim 1 wherein the firing temperature is in the range of 800 -900°C.

15. The composition of Claim 2 wherein the firing temperature is in the range of 800 -900°C.

16. The composition of Claim 3 wherein the firing temperature is in the range of 800 -900°C.

FIG.1

FIG.2

# FIG.3

EP 0 895 252 A1

# FIG.4

HTCR
in ppm/C

RESISTOR LENGTH in mm

10R1 WITH TERMINATION A

10R1 WITH TERMINATION H

EP 0 895 252 A1

European Patent
Office

**EUROPEAN SEARCH REPORT**

Application Number

EP 98 11 1845

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP 0 033 979 A (DU PONT) 19 August 1981 | 1,4,8, 11,14 | H01B1/16 C04B41/88 |
| Y |  | 10 |  |
| A |  | 2,3,9, 12,13, 15,16 |  |
|  | * claims 1,4 * <br> * examples 5-8 * <br> --- |  |  |
| X | DATABASE WPI <br> Section Ch, Week 9649 <br> Derwent Publications Ltd., London, GB; <br> Class L03, AN 96-490519 <br> XP002081378 <br> -& JP 08 249924 A (SUMITOMO METAL MINING CO), 27 September 1996 <br> * abstract * <br> * example 2; table 1 * <br> --- | 1,4 |  |
| X | DATABASE WPI <br> Section Ch, Week 7921 <br> Derwent Publications Ltd., London, GB; <br> Class A85, AN 79-39472B <br> XP002081379 <br> -& JP 54 046236 A (MURATA MFG CO LTD) <br> , 12 April 1979 | 1,3,4,6, 13,16 | TECHNICAL FIELDS SEARCHED (Int.Cl.6) <br><br> C04B <br> H01B |
| Y | * abstract * <br> * example 9; table 1 * <br> --- | 10 |  |
| X | EP 0 545 166 A (DU PONT) 9 June 1993 <br> * claims 1,3 * <br> * examples 3-12,14-16,18-20; table 1 * <br> --- | 1,3,4,6 |  |
| X | US 5 346 651 A (OPROSKY JOANNA ET AL) 13 September 1994 <br> * claim 1 * <br> * example 1 * <br> --- | 1,4 |  |
|  | -/-- |  |  |

The present search report has been drawn up for all claims

| Place of search | Date of completion of the search | Examiner |
|---|---|---|
| THE HAGUE | 20 October 1998 | Rosenberger, J |

**European Patent Office**

## EUROPEAN SEARCH REPORT

Application Number

EP 98 11 1845

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | DATABASE WPI<br>Section Ch, Week 7913<br>Derwent Publications Ltd., London, GB;<br>Class A82, AN 79-24588B<br>XP002081380<br>-& JP 54 022596 A (MURATA MFG CO LTD)<br>, 20 February 1979<br>* abstract *<br>* examples 7,8; tables 1,2 * | 1,3,4,6 | |
| A | PATENT ABSTRACTS OF JAPAN<br>vol. 013, no. 509 (E-846),<br>15 November 1989<br>& JP 01 206508 A (ASAHI GLASS CO LTD),<br>18 August 1989<br>* abstract * | 1-3,5-7 | |

TECHNICAL FIELDS SEARCHED (Int.Cl.6)

The present search report has been drawn up for all claims

| Place of search | Date of completion of the search | Examiner |
|---|---|---|
| THE HAGUE | 20 October 1998 | Rosenberger, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)